# EUROPEAN PATENT APPLICATION

(11) **EP 4 821 725 A1**
(43) Date of publication of application: **14.10.2026**
(21) Application number: 26169254.5
(22) Date of filing: 30.03.2026
(51) Int. Cl.: B60K 1/04

(54) **ELECTRIC VEHICLE**

(30) Priority: 11.04.2025 JP 2025065417
(71) Applicant: Suzuki Motor Corporation, Hamamatsu-shi, Shizuoka 432-8611 (JP)
(72) Inventor: MIKAMOTO, Takayuki, Hamamatsu-shi, 432-8611 (JP)
(74) Representative: Haseltine Lake Kempner LLP

(57) **Abstract**

An electric vehicle V includes a drive unit 4 serving as a driving power source for propelling the vehicle, a vehicle body frame F including a pair of side frames 61a and 61b extending in a vehicle longitudinal direction DL and spaced apart from each other in a vehicle lateral direction DW, and a battery case 7 configured to accommodate a battery, and supported between the pair of side frames 61a and 61b and disposed at a predetermined height position. The drive unit 4 includes an electric motor 41 configured to be driven by electric power stored in the battery, and at least the electric motor 41 of the drive unit 4 is disposed below the battery case 7.

## Description

### BACKGROUND OF THE INVENTION

### Field of the Invention

The present invention relates to an electric vehicle.

### Description of the Related Art

There exists an electric vehicle that is equipped with an electric motor as a driving power source and is configured to travel by power generated by the electric motor.

### Citation List

### Patent Document

Patent Document 1: Japanese Patent Laid-Open No. 2014-069686

In the electric vehicle disclosed in Patent Document 1, an electric motor is interposed between left and right rear wheels beneath a cargo bed provided to the rear of a cab. A battery serving as a power source is arranged forward of the electric motor. In other words, the electric motor and the battery are arranged in a fore-and-aft relationship.

Since the electric motor can serve as a source of noise, it is necessary to implement measures for suppressing the transmission of noise generated by the motor to the surrounding environment.

When the electric motor is located in close proximity to the cab, the influence of such noise on the interior comfort of the vehicle becomes significant, thereby increasing the demand for noise-reduction measures.

### SUMMARY OF THE INVENTION

In consideration of such circumstances, an object of the present invention is to provide an electric vehicle capable of suppressing noise perceived by a driver or passenger within the vehicle cabin.

To solve the above-mentioned problem, an electric vehicle according to one aspect of the present invention includes a drive unit serving as a driving power source for propelling the vehicle, a vehicle body frame including a pair of side frames extending in a vehicle longitudinal direction and spaced apart from each other in a vehicle lateral direction, and a battery case configured to accommodate a battery, and disposed at a predetermined height position in a state where it is supported between the pair of side frames.

In this aspect, the drive unit may include an electric motor configured to be driven by electric power stored in the battery, and at least the electric motor of the drive unit may be disposed below the battery case.

The battery case may be a flat case elongated in the vehicle longitudinal direction and wide in the vehicle lateral direction relative to a vertical direction.

In this aspect, the battery case may be configured to extend across an entire width between the pair of side frames.

The drive unit may be supported on the vehicle body frame via a plurality of brackets including a first bracket and a second bracket disposed rearward of the first bracket in the vehicle longitudinal direction.

In this aspect, the battery case may be disposed, in the vehicle longitudinal direction, between a floor of a driver's seat and the second bracket.

The drive unit may further include a reduction gear configured to output an output torque of the electric motor with a predetermined gear ratio, which may be disposed rearward of the electric motor in the vehicle longitudinal direction.

In this aspect, the battery case may have a front end portion positioned forward of the electric motor in the vehicle longitudinal direction and a rear end portion positioned rearward of the reduction gear in the vehicle longitudinal direction.

The pair of side frames may respectively include a front frame portion extending in the vehicle longitudinal direction, a rear frame portion extending in the vehicle longitudinal direction and positioned rearward of and above the front frame portion, and a connecting portion connecting the front frame portion and the rear frame portion and inclined upward toward the rear.

In this aspect, the battery case may be supported by the rear frame portions, and may be configured such that a front portion thereof projects forward from the rear frame portions toward above the connecting portions and is disposed above the electric motor.

The electric vehicle may further include a cab, a cab back panel, and a deck floor forming a load-receiving surface of a cargo bed.

In this aspect, the cab may be disposed above the front frame portions, and the rear frame portions may support the deck floor.

The battery case may also be arranged such that a front end portion thereof is disposed, in the vehicle longitudinal direction, in proximity to the cab back panel.

The battery case may have an upper surface portion disposed adjacent to the deck floor in the vertical direction.

The electric vehicle may further include a front-row seat in a passenger compartment disposed above the front frame portions.

In this aspect, the electric vehicle may also include a rear-row seat in the passenger compartment, of which floor is supported by the rear frame portions.

According to one aspect of the present invention, by supporting a battery case between a pair of side frames, and by arranging a drive unit such that at least the electric motor is positioned beneath the battery case, transmission of noise generated by the drive unit, particularly by the electric motor, to the vehicle cabin can be suppressed by the battery case, thereby reducing noise perceived by the driver or passenger within the vehicle interior.

### BRIEF DESCRIPTION OF THE DRAWINGS

FIG. 1 is a side view of an electric vehicle according to one embodiment of the present invention.
FIG. 2 is a cross-sectional view of the electric vehicle taken along line X-X in FIG. 1.
FIG. 3A is a cross-sectional view of the electric vehicle taken along line Y-Y and FIG. 3B is a cross-sectional view of the electric vehicle taken along line Z-Z in FIG. 2.
FIG. 4 is an enlarged cross-sectional view of a portion of the electric vehicle shown in FIG. 3A, illustrating the positional relationship among a drive unit, a side frame, and a bracket.
FIG. 5 is an enlarged cross-sectional view of a portion of the electric vehicle shown in FIG. 3B, illustrating the positional relationship among the drive unit, the side frame, and the bracket.
FIG. 6 is a side view of a drive unit provided in the electric vehicle shown in FIG. 1.
FIGS. 7A and 7B are front views of the drive unit shown in FIG. 6.
FIGS. 8A and 8B are bottom views of the drive unit shown in FIG. 6.
FIG. 9 is a perspective view showing the drive unit, the side frame, and a support mechanism provided in the electric vehicle shown in FIG. 1 in an assembled state.
FIGS. 10A and 10B are perspective views illustrating the positional relationship among the drive unit, a power transmission mechanism, and a battery case provided in the electric vehicle shown in FIG. 1.
FIG. 11A is a perspective view illustrating the positional relationship between the side frame and the battery case of the electric vehicle and FIG. 11B is a plan view illustrating the positional relationship between the side frame and the battery case of the electric vehicle shown in FIG. 1.
FIG. 12A is a plan view illustrating the positional relationship among the drive unit, the side frame, and the bracket of the electric vehicle and FIG. 12B is a bottom view illustrating the positional relationship among the drive unit, the side frame, and the bracket of the electric vehicle shown in FIG. 1.
FIG. 13 is a plan view showing the drive unit and peripheral components provided in the electric vehicle shown in FIG. 1 in an assembled state.
FIG. 14 is a front view illustrating the positional relationship between the drive unit and a cross member of the electric vehicle shown in FIG. 1.

### DETAILED DESCRIPTION OF THE PREFERRED EMBODIMENT

An embodiment of the present invention is described below with reference to drawings.

### (Overall Configuration of the Electric Vehicle)

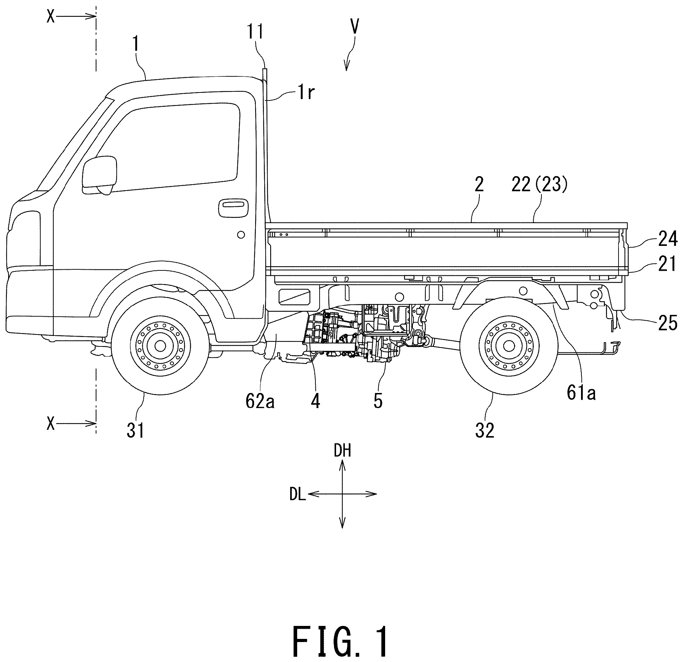

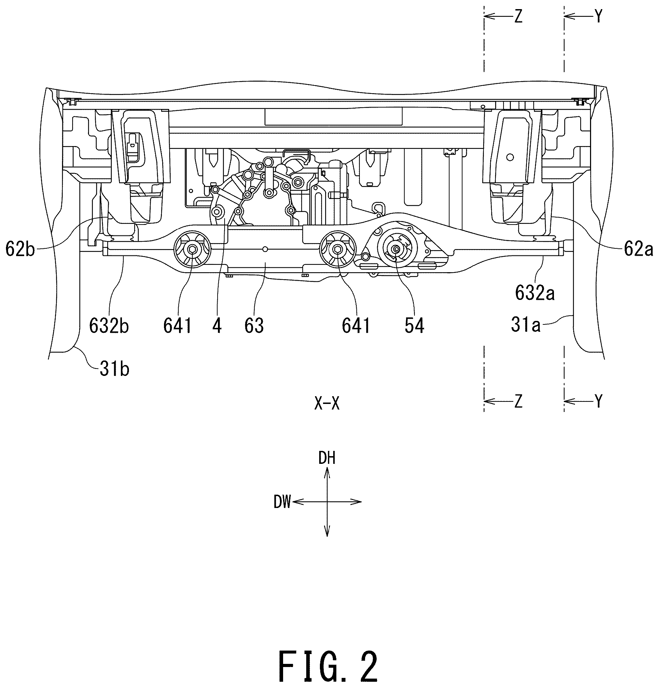

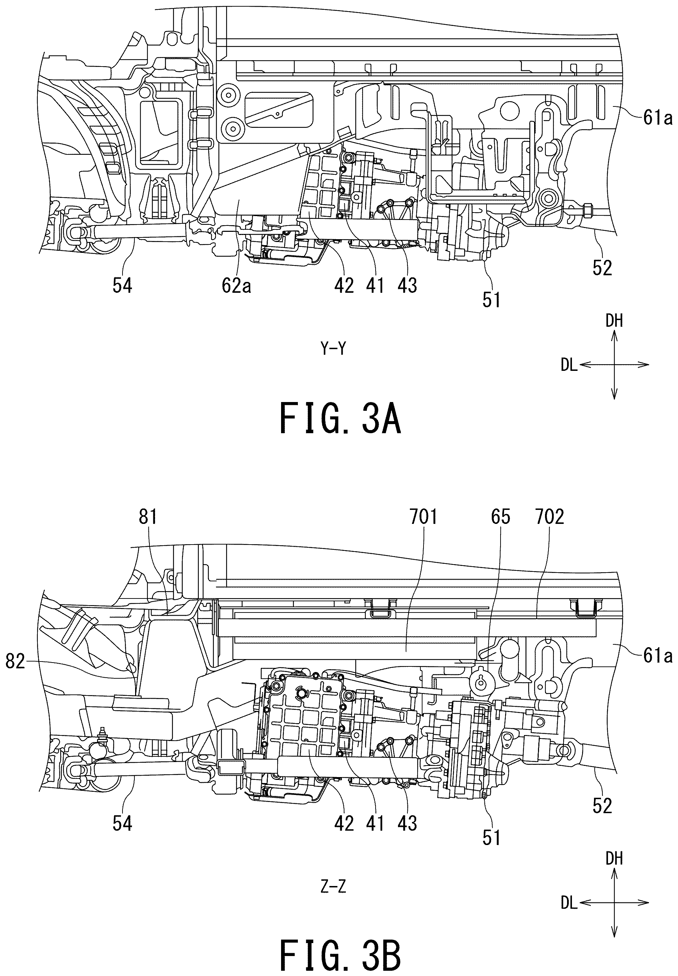

FIG. 1 is a side view of an electric vehicle (hereinafter sometimes simply referred to as "vehicle") V according to one embodiment of the present invention. FIG. 2 is a cross-sectional view of the vehicle V taken along line X-X in FIG. 1, and FIGS. 3A and 3B are cross-sectional views of the vehicle V taken along lines Y-Y and Z-Z in FIG. 2. The cross-section along line Y-Y is shown in FIG. 3A, and the cross-section along line Z-Z is shown in FIG. 3B.

In FIG. 1, arrow DL indicates the longitudinal direction of the vehicle V, and arrow DH indicates the vertical direction of the vehicle V. The vehicle longitudinal direction DL corresponds to the front-rear direction of the vehicle V.

In the drawing, the left side corresponds to the front side of the vehicle V, and the right side corresponds to the rear side.

In the following description, the vertical direction perpendicular to the ground is indicated by arrow DH, and the width or lateral direction of the vehicle V is indicated by arrow DW (see FIG. 2). The right-hand side is defined as the right side when facing forward, and the left-hand side is defined as the left side.

In this embodiment, the electric vehicle V is a flat-body type compact EV truck, and includes a cab 1 and a cargo bed 2.

As shown in FIG. 1, the cab 1 is provided at the front portion of the vehicle V and includes a driver's seat for a driver to sit on and a passenger seat for an occupant to sit on within a cabin space. The cab 1 is disposed above a pair of front wheels 31 located on the left and right sides.

The cargo bed 2 is provided behind the cab 1. A cab back panel 11 is mounted to a rear portion 1r of the cab 1. The cab back panel 11 can serve as a support for the cargo when loading elongated cargo such as boards by leaning the cargo against the panel.

The cargo bed 2 extends rearward from a vicinity of the lower end of the cab back panel 11 to a position beyond a pair of rear wheels 32 disposed on the left and right sides. Beneath the cargo bed 2, a drive unit 4 and a power transmission mechanism 5, which will be described later, are arranged.

The cargo bed 2 includes a flat floor portion (hereinafter referred to as "deck floor") 21 on which cargo is loaded. The deck floor 21 is surrounded on four sides by the rear portion 1r of the cab 1 and by movable gates 22, 23, and 24, commonly referred to as "side boards." Specifically, the cargo bed 2 includes, as the movable gates, a left side gate 22 provided at the left end of the deck floor 21, a right side gate 23 provided at the right end of the deck floor 21, and a rear gate 24 provided at the rear end of the deck floor 21. The deck floor 21 has a rectangular shape elongated in the vehicle longitudinal direction DL and forms a load-receiving surface of the cargo bed 2.

The left side gate 22 and the right side gate 23 are rotatably supported relative to the deck floor 21 by side hinges (not shown) provided at respective lateral edges of the deck floor 21. Each of the left and right side gates 22, 23 can be rotated approximately 90° outward or laterally from a closed position to an open position about the corresponding side hinge.

The rear gate 24 is rotatably supported relative to the deck floor 21 by a rear hinge (not shown) provided at the rear end of the deck floor 21, and is rotatable between a closed position and an open position about the rear hinge. In the closed position, the rear gate 24 stands upright perpendicular to the deck floor 21 and abuts against the rear ends of the left and right side gates 22, 23, thereby defining the rear boundary of the cargo space above the deck floor 21. In the open position, the rear gate 24 lies parallel to the deck floor 21, or horizontally similar to the left and right side gates 22, 23, thereby opening the deck floor 21 rearward.

The cargo bed 2 further includes a rear downward-extension portion 25 that extends vertically downward from the rear end of the deck floor 21 beneath the rear gate 24. The rear downward-extension portion 25 is provided with a tail lamp unit, a backup lamp, and a rear reflector (not shown).

### (Drive Unit and Power Transmission Mechanism)

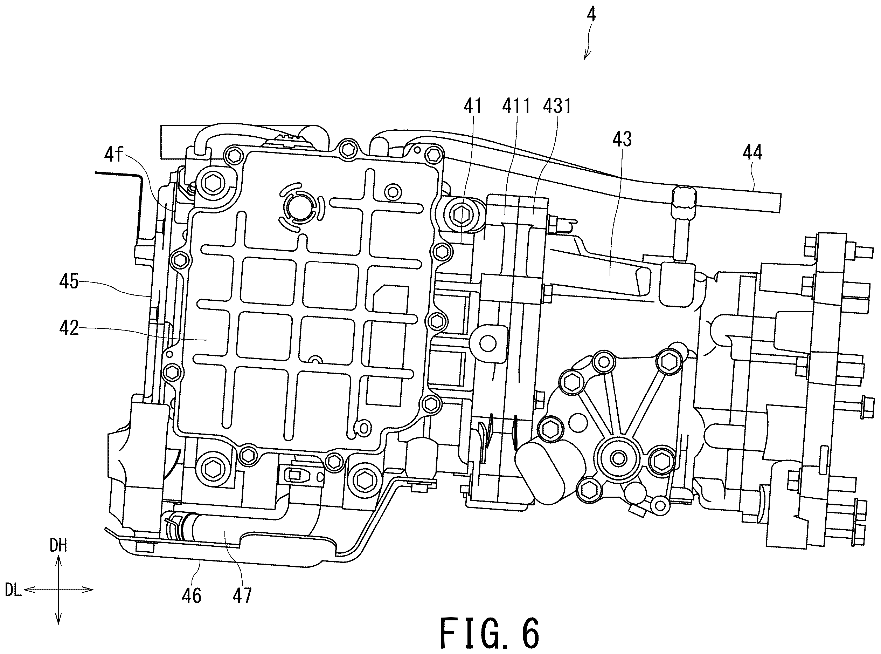

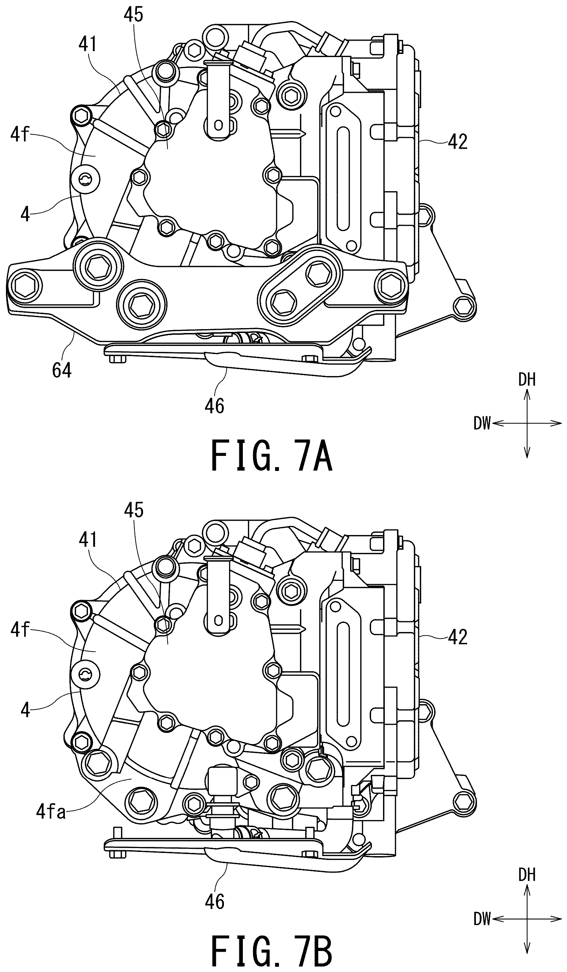

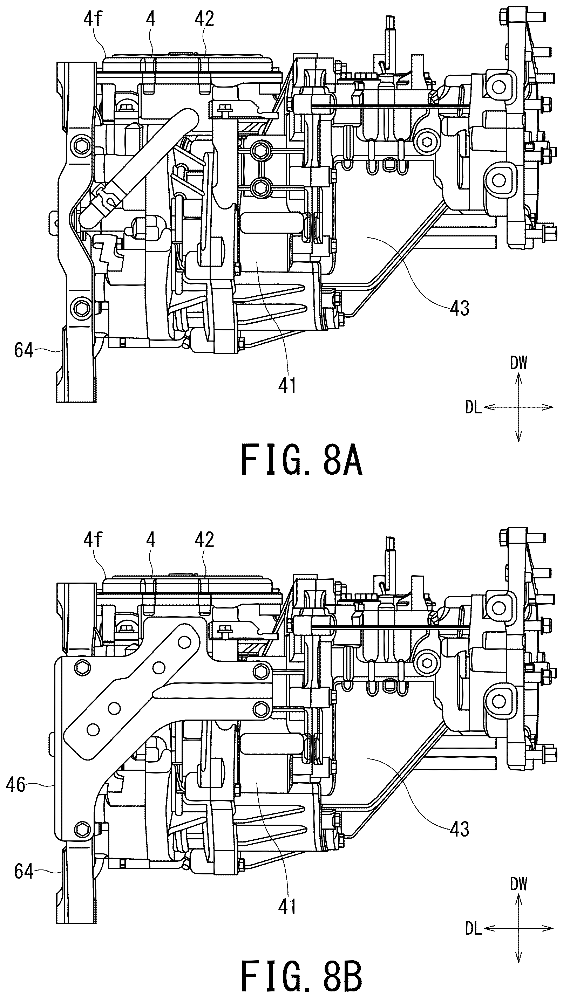

FIG. 6 is a side view of a drive unit 4 provided in the electric vehicle V according to the present embodiment, as viewed from the left side. FIGS. 7A and 7B are front views of the drive unit 4, and FIG. 8A and 8B are bottom views thereof.

The electric vehicle V is equipped with the drive unit 4 serving as a driving source for propelling the vehicle V.

As shown in FIG. 6, the drive unit 4 includes, as principal components, an electric motor 41, an inverter 42, and a reduction mechanism 43. The drive unit 4 is disposed between the front wheels 31 and the rear wheels 32 in the longitudinal direction DL of the vehicle V, specifically beneath the cargo bed 2 and behind the cab 1, in proximity to the lower-end portion of the cab 1 (see FIGS. 2 and 3).

The electric motor 41 may be, for example, a permanent magnet synchronous motor, arranged such that its rotational axis extends along the vehicle longitudinal direction DL. The term "rotational axis" refers to the central axis of the rotor of the electric motor 41. In other words, the rotational axis of the electric motor 41 is oriented perpendicular to the lateral direction DW of the vehicle V. The electric motor 41 is not limited to a permanent magnet synchronous motor, but may alternatively be an induction motor or a switched reluctance motor, or other types of AC motors.

The electric vehicle V further includes a battery serving as a power source for the electric motor 41. The battery is housed within a battery case 7 described later. In the battery case 7, a plurality of batteries or battery cells are accommodated in the form of a module in which the battery cells are connected in series to one another.

The inverter 42 converts direct current power supplied from the battery housed in the battery case 7 into alternating current power, and adjusts the frequency and amplitude of the drive current to be supplied to the electric motor 41. Accordingly, the rotational speed and torque of the electric motor 41 can be controlled. The inverter 42 is disposed on one side of the electric motor 41 in the vehicle lateral direction DW, and in this embodiment, the inverter 42 is arranged to the left side of the electric motor 41, adjacent to the left side surface of the electric motor 41, and is fastened to the electric motor 41 by bolts or other fastening members.

The reduction mechanism 43 is disposed behind the electric motor 41 and integrally formed therewith. Specifically, the housing of the reduction mechanism 43 and the motor case of the electric motor 41 are joined together via flanges 411 and 431. The reduction mechanism 43 transmits the output of the electric motor 41 to an output shaft (i.e., the rear-wheel drive shaft 52 and the front-wheel drive shaft 54 described later) at a predetermined gear ratio. The gear ratio may be variable, thereby imparting a transmission function to the reduction mechanism 43.

Direct current power from the battery is supplied to the inverter 42 via a high-voltage power supply line 44. The direct current power supplied to the inverter 42 is converted into alternating current power by the inverter 42, and is delivered to the electric motor 41 through power lines disposed inside the housing of the inverter 42.

A rotational position sensor 45 is mounted on the front surface portion 4f of the drive unit 4 to detect the rotational position of the electric motor 41, specifically the rotational position of the rotor (not shown). Based on the detected rotational position, the operating state of the electric motor 41, such as its rotational speed, can be determined.

A protective cover 46 is mounted on the bottom portion of the drive unit 4. Beneath the main body of the drive unit 4, a pipe 47 for circulating cooling water for the electric motor 41 and the inverter 42 is disposed. The protective cover 46 protects the cooling water pipe 47 from contact with foreign objects such as stones.

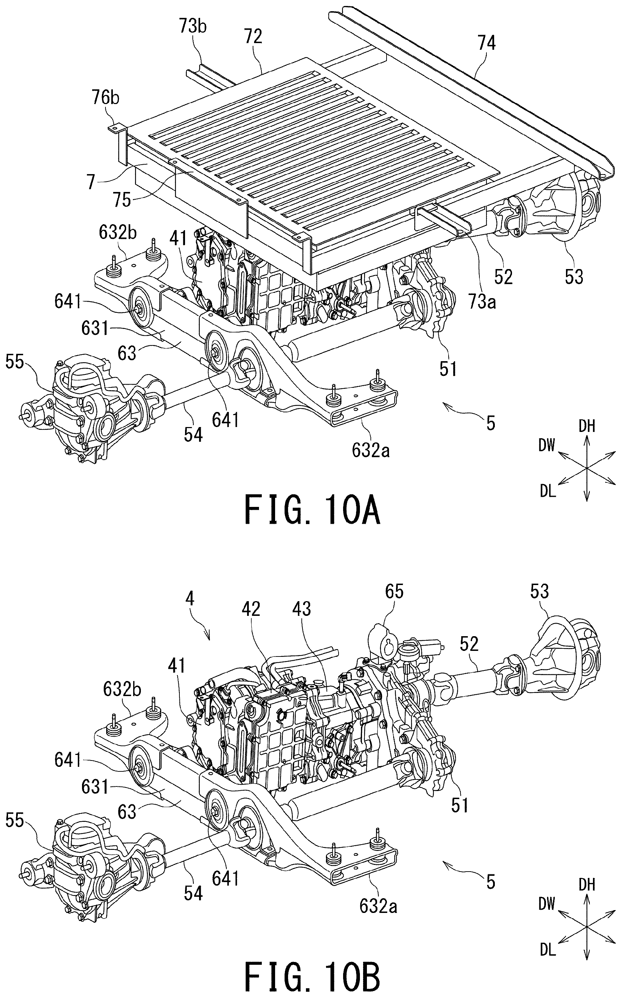

FIGS. 10A and 10B are perspective views showing the drive unit 4 and the power transmission mechanism 5 in an assembled state. FIG. 10A illustrates the relative arrangement of the battery case 7 in the overall assembly by depicting the battery case 7 together with the associated components, while FIG. 10B shows the configuration of the assembly itself with the battery case 7 removed.

The power transmission mechanism 5 includes a power distribution device 51, a rear-wheel drive shaft 52, a rear differential gear 53, a front-wheel drive shaft 54, and a front differential gear 55.

The power distribution device 51 is configured to selectively interrupt transmission of power to the front-wheel drive shaft 54 or the front wheels 31. Accordingly, the electric vehicle V can be operated in either a four-wheel drive mode or a two-wheel drive mode. In the four-wheel drive mode, the power distribution device 51 distributes the power of the drive unit 4, specifically the output of the reduction mechanism 43, to both the front wheels 31 and the rear wheels 32. In the two-wheel drive mode, the power distribution device 51 transmits the output only to the rear wheels 32.

The electric vehicle V is not limited to the above configuration, and may alternatively be operated exclusively in the four-wheel drive mode. Furthermore, the power distribution device 51, the front-wheel drive shaft 54, and the front differential gear 55 may be omitted, such that the electric vehicle V is always operated in the two-wheel drive mode with rear-wheel drive.

During operation in the four-wheel drive mode, the power distribution device 51 distributes the power output from the electric motor 41 via the reduction mechanism 43 to both the rear-wheel drive shaft 52 and the front-wheel drive shaft 54. The power distribution device 51 includes a power transmission medium such as a chain, and transmits a portion of the power to the rear wheels 32 via the rear-wheel drive shaft 52, while transmitting another portion of the power to the front-wheel drive shaft 54 and the front wheels 31 via the power transmission medium.

The rear-wheel drive shaft 52 extends rearward in the vehicle longitudinal direction DL from the power distribution device 51, thereby power-connecting the drive unit 4 to the rear differential gear 53. The power distributed to the rear-wheel drive shaft 52 by the power distribution device 51 is transmitted to the rear differential gear 53. The rear-wheel drive shaft 52 may be embodied as a propeller shaft.

The rear differential gear 53 is disposed between the left and right rear wheels 32, and transmits the power delivered via the rear-wheel drive shaft 52 to each of the left and right rear wheels.

The front-wheel drive shaft 54 extends forward in the vehicle longitudinal direction DL from the power distribution device 51, thereby power-connecting the drive unit 4 to the front differential gear 55. The power distributed to the front-wheel drive shaft 54 by the power distribution device 51 is transmitted to the front differential gear 55. The front-wheel drive shaft 54, similar to the rear-wheel drive shaft 52, may be embodied as a propeller shaft.

The front differential gear 55 is disposed between the left and right front wheels 31, and transmits the power delivered via the front-wheel drive shaft 54 to each of the left front wheel 31a and the right front wheel 31b (see FIG. 2).

### (Support Structure for the Drive Unit)

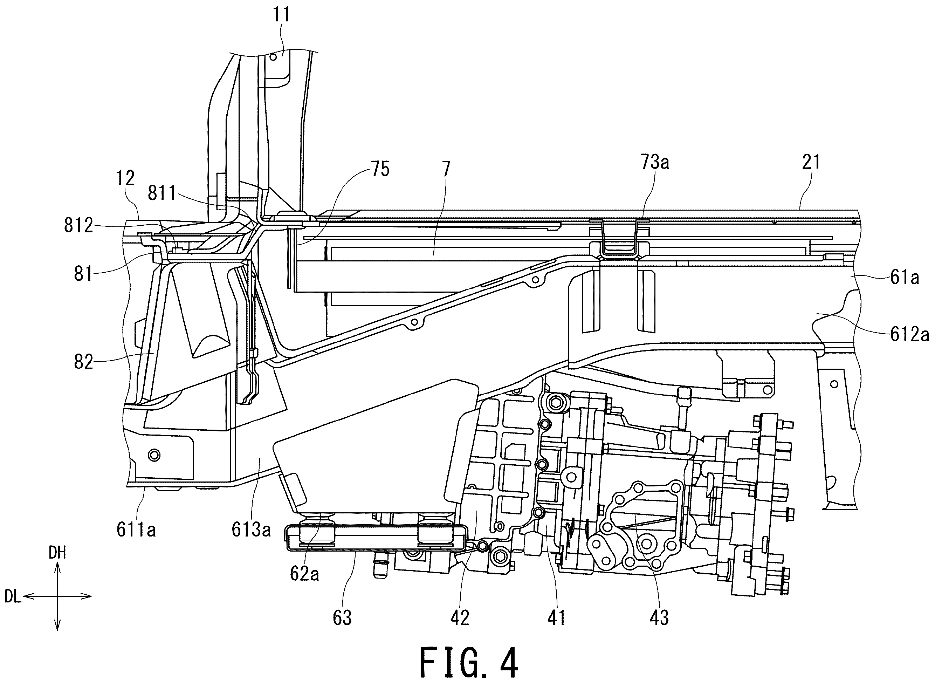

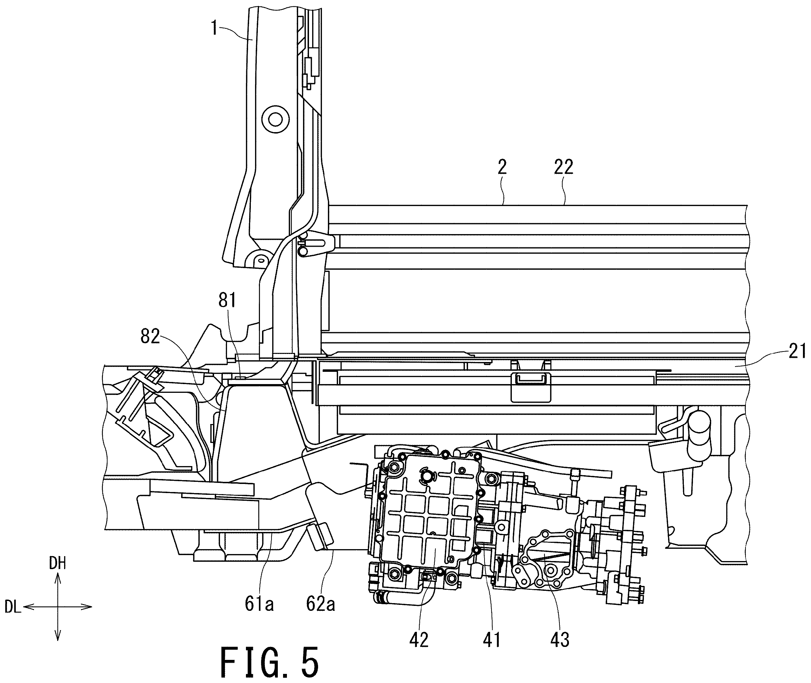

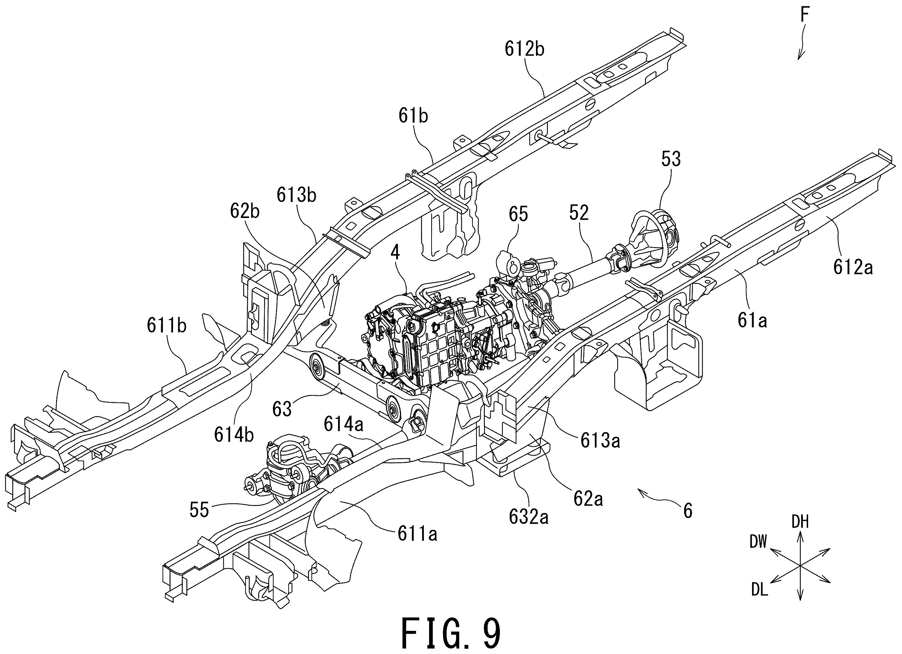

FIGS. 4, 5, and 9 illustrate a support structure for a drive unit 4 according to the present embodiment. FIGS. 4 and 5 show the positional relationship among the drive unit 4, a side frame 61a, and a bracket 62a. FIG. 4 is an enlarged view of the cross section shown in FIG. 3A, and FIG. 5 is an enlarged view of the cross section shown in FIG. 3B. FIG. 9 is a perspective view showing the drive unit 4, the side frames 61a and 61b, and a support mechanism 6 of the electric vehicle V in an assembled state.

As shown in FIG. 9, the electric vehicle V includes a pair of side frames 61a and 61b. The pair of side frames 61a and 61b respectively include front frame portions 611a and 611b, rear frame portions 612a and 612b, and connecting portions 613a and 613b.

The front frame portions 611a and 611b are disposed at a lower front region of the electric vehicle V and extend in the vehicle longitudinal direction DL.

The rear frame portions 612a and 612b are disposed rearward of the front frame portions 611a and 611b and are positioned above the front frame portions 611a and 611b. The rear frame portions 612a and 612b extend substantially parallel to the front frame portions 611a and 611b in the vehicle longitudinal direction DL.

The connecting portions 613a and 613b are connected to rear end portions of the front frame portions 611a and 611b, extend obliquely upward toward the rear, and are connected to front end portions of the rear frame portions 612a and 612b. In other words, the connecting portions 613a and 613b join the front frame portions 611a and 611b to the rear frame portions 612a and 612b, thereby integrally coupling them.

A side frame on the left side (hereinafter referred to as "left side frame") 61a is formed by the front frame portion 611a, the rear frame portion 612a, and the connecting portion 613a arranged on the left side of a vehicle body centerline CL of the electric vehicle V extending in the vehicle longitudinal direction DL (hereinafter sometimes referred to as "fore-and-aft centerline"). Likewise, a side frame on the right side (hereinafter referred to as "right side frame") 61b is formed by the front frame portion 611b, the rear frame portion 612b, and the connecting portion 613b arranged on the right side of the fore-and-aft centerline.

The left side frame 61a and the right side frame 61b are spaced apart from each other in the vehicle lateral direction DW and are arranged parallel to each other. The left and right side frames 61a and 61b are interconnected each other by a plurality of frame cross members (not shown) extending across the vehicle lateral direction DW between the pair of side frames 61a and 61b. A vehicle body frame of the electric vehicle V is constituted as an assembly of the pair of side frames 61a and 61b and the plurality of frame cross members.

A cab 1 is disposed above the front frame portions 611a and 611b, and a cargo bed 2 is disposed above the rear frame portions 612a and 612b. The front wheels 31 are suspended from the front frame portions 611a and 611b, and the rear wheels 32 are suspended from the rear frame portions 612a and 612b. The connecting portions 613a and 613b are located between the cab 1 and the cargo bed 2, specifically in a region obliquely downward and rearward of a rear surface portion 1r of the cab 1 or a cab back panel 11, and close to the rear surface portion 1r or the cab back panel 11.

In this embodiment, inwardly inclined portions 614a and 614b are formed in the connecting portions 613a and 613b, respectively, so as to narrow the distance between the left and right connecting portions 613a and 613b provided respectively in the left and right side frames 61a and 61b. The inwardly inclined portions 614a and 614b are formed in each of the left and right side frames 61a and 61b over a predetermined range in the vehicle longitudinal direction DL, extending from the connecting portions 613a and 613b beyond the connection or boundary with the front frame portions 611a and 611b (that is, beyond the front end edges of the connecting portions 613a and 613b). Accordingly, in the pair of side frames 61a and 61b, the spacing between the regions of the front frame portions 611a and 611b located forward of the inwardly inclined portions 614a and 614b is narrower than the spacing between the rear frame portions 612a and 612b.

### (Detailed Configuration of the Support Mechanism)

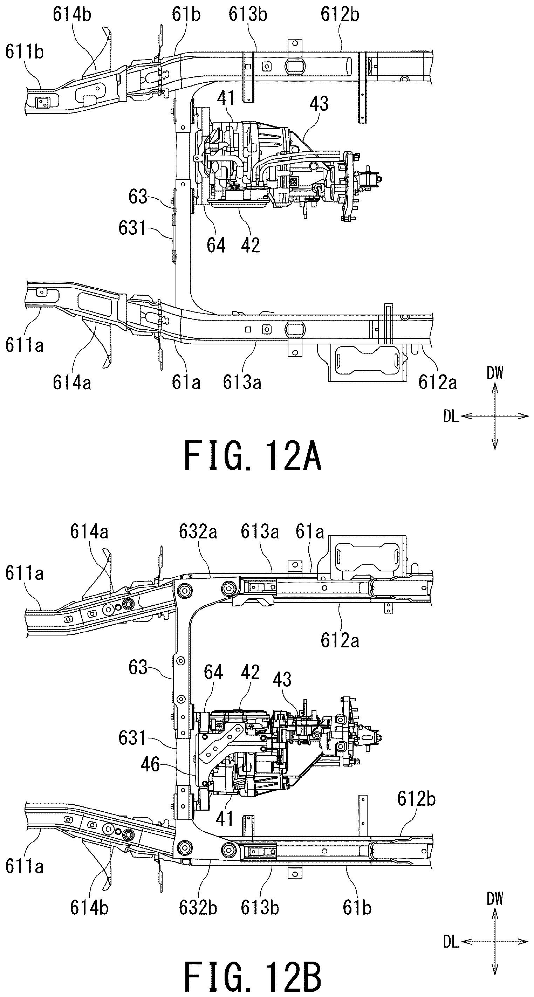

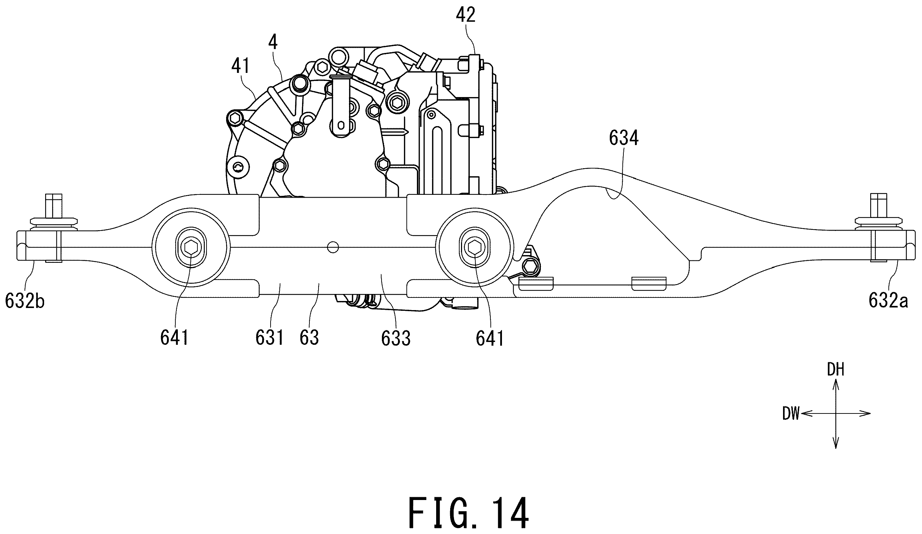

FIG. 12A and 12B illustrate the positional relationship among the drive unit 4, the side frames 61a and 61b, and a cross member 63 in the electric vehicle V in a plan view (FIG. 12A) and a bottom view (FIG. 12B). FIG. 14 is a front view showing the positional relationship between the drive unit 4 and the cross member 63. Reference is also made to FIG. 9.

As shown in FIG. 9, in the present embodiment, a support mechanism 6 for the drive unit 4 is provided, and the drive unit 4 is supported relative to the left and right side frames 61a and 61b by the support mechanism 6.

The support mechanism 6 includes brackets 62a and 62b, and the cross member 63.

The brackets 62a and 62b (hereinafter collectively referred to as "side brackets") are mounted respectively to the left side frame 61a and the right side frame 61b, and the drive unit 4 is suspended and supported between the left and right side brackets 62a and 62b.

In this embodiment, the side brackets 62a and 62b are attached to the connecting portions 613a and 613b of the left and right side frames 61a and 61b, respectively. More specifically, the side brackets 62a and 62b are mounted at a position near the front ends of the connecting portions 613a and 613b, closer to the front frame portions 611a and 611b. The side brackets 62a and 62b are suspended downward from the connecting portions 613a and 613b and extend below the lower surfaces of the front frame portions 611a and 611b. In other words, the lower end portions of the side brackets 62a and 62b are positioned below the front frame portions 611a and 611b.

The cross member 63 extends across the vehicle lateral direction DW between the left and right side brackets 62a and 62b.

As shown in FIGS. 12A and 12B, the drive unit 4 is mounted to the cross member 63 and is disposed between the pair of side frames 61a and 61b. Thus, the drive unit 4 is in a state where it is indirectly supported relative to the pair of side frames 61a and 61b via the cross member 63.

In this embodiment, the drive unit 4 and the cross member 63 are arranged such that the cross member 63 extends across the front side of the drive unit 4 in the vehicle lateral direction DW. The drive unit 4 is mounted to the cross member 63 at a front surface portion 4f thereof. Specifically, as described later, a bracket 64 is attached to the front surface portion 4f of the drive unit 4, and the bracket 64 is mounted to the cross member 63, thereby mounting the drive unit 4 to the cross member 63 via the bracket 64.

The drive unit 4 is supported at its front end portion by side brackets 62a and 62b and the cross member 63, relative to the side frames 61a and 61b or the vehicle body frame F. The rear end portion of the drive unit 4 is supported by a rear bracket 65. The rear bracket 65 is attached to an upper portion of a case of the power distribution device 51 and is suspended from a frame cross member of the vehicle body frame F.

As described above, the drive unit 4 is supported at multiple positions in the vehicle longitudinal direction DL relative to the vehicle body frame F or the vehicle body. In this arrangement, the bracket 64 and the cross member 63 correspond to a "first bracket" according to the present embodiment, and the rear bracket 65 corresponds to a "second bracket" according to the present embodiment.

### (Configuration of the Cross Member)

Referring again to FIGS. 12 and 14, and as shown in FIG. 12B, the cross member 63 includes a main body portion 631 and a pair of coupling portions 632a and 632b.

As shown in FIG. 14, the main body portion 631 extends in the vehicle lateral direction DW at a position forward of the drive unit 4. The cross member 63 includes, at a location of the main body portion 631 that is offset to the right relative to the center in the vehicle lateral direction DW, a mounting portion 633 to which the drive unit 4 is mounted. That is, in this embodiment, the mounting portion 633 for the drive unit 4 is formed in the main body portion 631 of the cross member 63. The drive unit 4 is mounted to the cross member 63 at the mounting portion 633.

The mounting portion 633 is offset to one side relative to the fore-and-aft centerline of the vehicle V in order to secure a space for accommodating the front-wheel drive shaft 54 that transmits power from the drive unit 4 to the front wheels 31. This layout also takes into account the overall weight balance of the assembly including the drive unit 4 and the power transmission mechanism 5. The main body portion 631 of the cross member 63 is provided with an opening 634 extending through it in the vehicle longitudinal direction DL, and the front-wheel drive shaft 54 is disposed through this opening 634.

The pair of coupling portions 632a and 632b are continuously formed at the opposite ends of the main body portion 631 in the vehicle lateral direction DW. The cross member 63 is coupled to the left and right side brackets 62a and 62b at these coupling portions 632a and 632b.

As shown in FIGS. 12A and 12B, the coupling portions 632a and 632b extend rearward in the vehicle longitudinal direction DL from their connection to the main body portion 631. In other words, the coupling portions 632a and 632b have a shape that is elongated in the vehicle longitudinal direction DL relative to the vehicle lateral direction DW, and its dimension in the vehicle longitudinal direction DL is greater than that of the main body portion 631 in the same direction. The coupling portions 632a and 632b are coupled to the side brackets 62a and 62b at multiple positions spaced apart in the vehicle longitudinal direction DL.

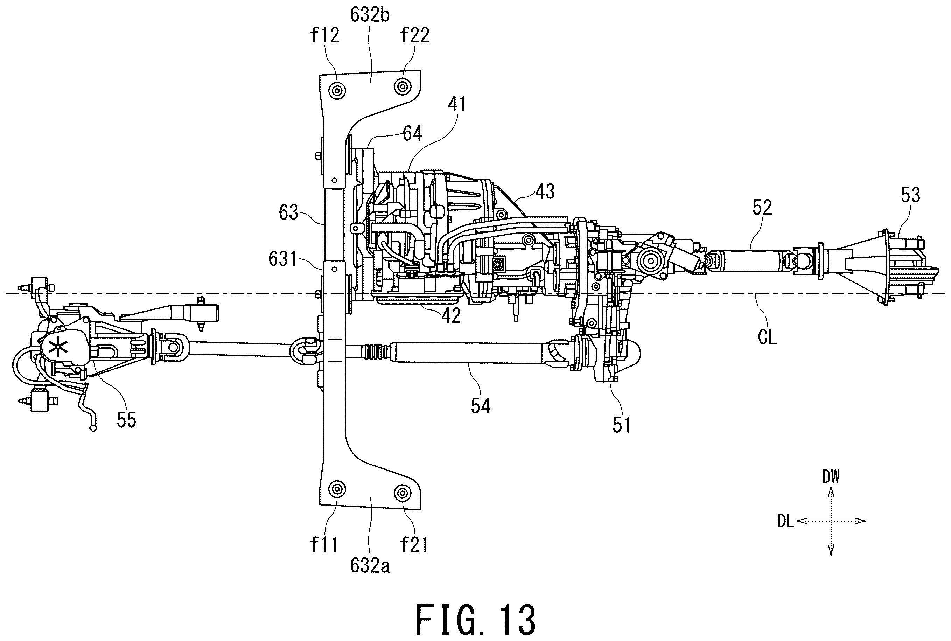

FIG. 13 is a plan view showing the drive unit 4 and surrounding components (including the power transmission mechanism 5 and the cross member 63) provided in the electric vehicle V in an assembled state.

The cross member 63 is fixed to the side brackets 62a and 62b by fastening members such as bolts.

As shown in FIG. 13, the coupling portions 632a and 632b include first fastening portions f11 and f12 located on extensions of the main body portion 631 in the vehicle lateral direction DW, and also second fastening portions f21 and f22 located rearward of the first fastening portions f11 and f12. The second fastening portions f21 and f22 are positioned outward in the vehicle lateral direction DW relative to the first fastening portions f11 and f12.

In other words, on the left side of the main body portion 631, the second fastening portion f21 is located to the left of the first fastening portion f11, and on the right side of the main body portion 631, the second fastening portion f22 is located to the right of the first fastening portion f12.

Accordingly, in the pair of coupling portions 632a and 632b, the spacing between the second fastening portions f21 and f22 is greater than the spacing between the first fastening portions f11 and f12. As described above, this is because the reduction in spacing between the pair of side frames 61a and 61b is formed over a predetermined range extending from the connecting portions 613a and 613b (specifically, the mid portions of the connecting portions 613a and 613b in the present embodiment) toward the front frame portions 611a and 611b (see FIGS. 12A and 12B). Such a configuration contributes to improved support stability of the drive unit 4 by the cross member 63.

As shown in FIGS. 12A and 12B, the drive unit 4 is coupled to the cross member 63 via a bracket 64 (hereinafter referred to as "front bracket").

Referring also to FIGS. 7A and 7B, the front bracket 64 has an elongated shape in the vehicle lateral direction DW relative to the vertical direction DH. The front bracket 64 is fixed to the front surface portion 4f of the drive unit 4 at multiple locations spaced apart in the vehicle lateral direction DW by fastening members such as bolts.

In this embodiment, the front bracket 64 is mounted to a lower front region 4fa of the front surface portion 4f of the drive unit 4, which is located below the rotational axis of the electric motor 41. A motor case of the electric motor 41 is extended radially outward from the rotational axis of the electric motor 41, and fixing portions (e.g., a bolt insertion hole) to which the front bracket 64 is fixed are formed in this extension. Accordingly, in a front view of the electric vehicle V as seen from the front along the vehicle longitudinal direction DL, the front bracket 64 overlaps the lower front portion 4fa of the drive unit 4.

The front bracket 64 is mounted to a cross member 63 via mount bushes 641.

As shown in FIG. 14, the mount bushes 641 are provided at multiple locations on the cross member 63, spaced apart from one another in the vehicle lateral direction DW. An axial member for receiving a rubber bush is attached to the front bracket 64, while a cylindrical retaining frame is provided on the cross member 63. The rubber bush is disposed between the axial member and the retaining frame. As a result, the front bracket 64 is mounted to the cross member 63 through the rubber bush, and the mount bush 641 elastically support the drive unit 4 relative to the cross member 63. The rubber bush suppresses transmission of vibration from the drive unit 4, particularly from the electric motor 41, to the cross member 63.

Further, in the state where the front bracket 64 is mounted to the cross member 63, the mount bushes 641 are positioned below the rotational axis of the electric motor 41. The front bracket 64 is located between the drive unit 4 and the cross member 63 in the vehicle longitudinal direction DL, and in a front view of the electric vehicle V, the front bracket 64 is concealed behind the cross member 63.

Referring again to FIG. 4, in the state where the drive unit 4 is mounted to the cross member 63 and supported relative to the pair of side frames 61a and 61b, an inverter 42 is arranged such that, in a side view of the electric vehicle V as seen from one side in the vehicle lateral direction DW, specifically from the left side of the electric vehicle V as shown in FIG. 4, a portion of the inverter 42 overlaps a side bracket 62a.

In this embodiment, the inverter 42 is disposed to the left of the electric motor 41, adjacent to its left side surface. In the side view (i.e., as viewed from the left side), the inverter 42 not only overlaps the side bracket 62a but also overlaps a connecting portion 613a of the left side frame 61a, which extends diagonally upward toward the rear. By overlapping both the side bracket 62a and the connecting portion 613a of the left side frame 61a, the inverter 42 can be concealed over a wider area from the outside, thereby enabling the inverter 42 to be protected more robustly and across a broader region.

### (Battery Case and Suspension Structure)

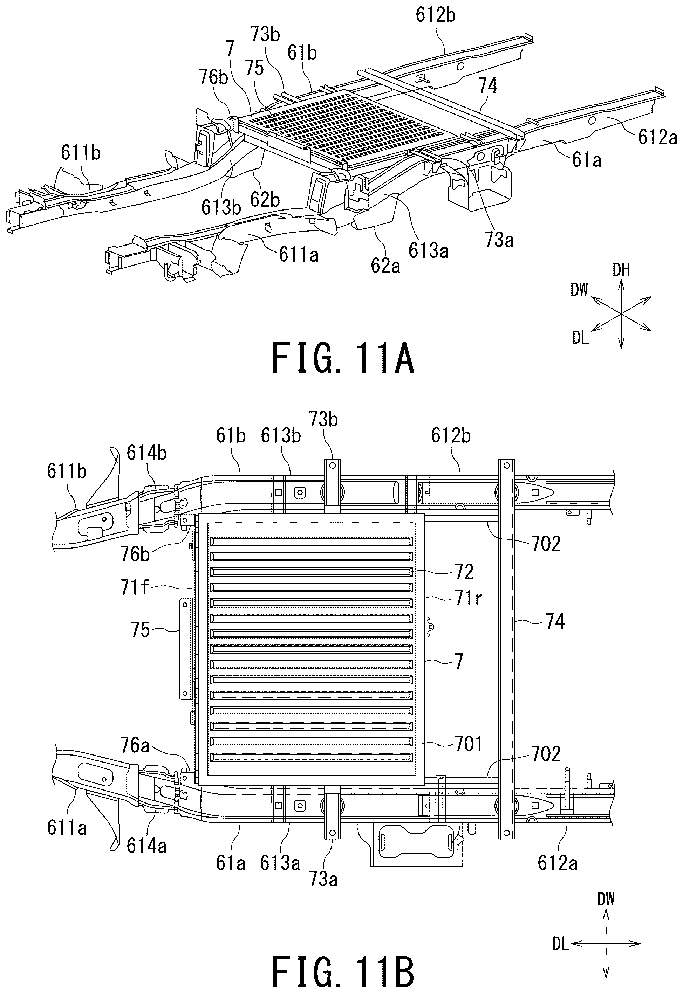

FIG. 11A is a perspective view illustrating the positional relationship between a battery case 7 and side frames 61a and 61b in the electric vehicle V, and FIG. 11B is a plan view illustrating the same.

As described above, the battery case 7 is suspended between the left and right side frames 61a and 61b and is disposed above the drive unit 4.

As shown in FIG. 11B, the battery case 7 is a flat case elongated in the vehicle lateral direction DW relative to the vehicle longitudinal direction DL, and has a dimension substantially equal to the spacing between the rear frame portions 612a and 612b of the pair of side frames 61a and 61b in the vehicle lateral direction DW. That is, the left or right side surface of the battery case 7, which faces outward in the vehicle lateral direction DW, is positioned close to the inner surface of the corresponding side frame 61a or 61b.

The battery case 7 is disposed between the pair of side frames 61a and 61b and is suspended relative to these side frames 61a and 61b.

Specifically, the battery case 7 is disposed between the rear frame portion 612a of the left side frame 61a and the rear frame portion 612b of the right side frame 61b, extending across the vehicle lateral direction DW. In this arrangement, a front end portion or front surface portion 71f of the battery case 7 is positioned in proximity to the cab back panel 11 in the vehicle longitudinal direction DL, and an upper cover or upper surface portion 72 of the battery case 7 is disposed in proximity to the deck floor 21 of the cargo bed 2 in the vertical direction DH.

On the other hand, a rear end portion or rear surface portion 71r of the battery case 7 is located forward of the previously described rear bracket 65. That is, the battery case 7 is positioned such that it is sandwiched in the vehicle longitudinal direction DL between the cab 1 (or a floor portion thereof) and the rear bracket 65.

The battery case 7 is supported at multiple positions, spaced apart in the vehicle longitudinal direction DL, relative to each of the left and right side frames 61a and 61b by a plurality of brackets 73 and 74 (two positions on each side in the present embodiment). The battery case 7 includes a case body 701 and a pair of support arms 702 joined to side surface portions of the case body 701 and extending rearward beyond the case body 701. The battery case 7 is supported by brackets (hereinafter referred to as "case side brackets") 73a and 73b attached near a central portion of the side surface portions of the case body 701, and by a bracket (hereinafter referred to as "case rear bracket") 74 extending between the pair of support arms 702 near rear end portions of the support arms 702. The case side brackets 73a and 73b are cantilevered relative to the case body 701.

In this configuration, the case body 701 of the battery case 7 is located between the cab 1 and the rear bracket 65, and the support arms 702 extend rearward beyond the rear bracket 65 such that the support arms 702 have rear end portions positioned behind the rear bracket 65 (see FIG. 3B).

A cross member 81 (hereinafter referred to as "cab cross member") is disposed in front of the battery case 7, and a bracket 75 (hereinafter referred to as "case-front bracket") extending downward from the cab cross member 81 is attached thereto (see FIG. 4).

The front end portion 71 of the battery case 7 is joined to the case-front bracket 75. Thus, the battery case 7 is supported not only by the left and right side frames 61a and 61b but also by the cab cross member 81.

A pair of pillar portions (hereinafter referred to as "side pillars") 82 extend upward from the respective side frames 61a and 61b, and the cab cross member 81 extends across the vehicle lateral direction DW between these side pillars 82 (see FIG. 5). The side pillars 82 rise from regions in the side frames 61a and 61b near the boundary between the front frame portions 611a and 611b and the connecting portions 613a and 613b.

In addition to the case-front bracket 75, at the front end portion 71 of the battery case 7, auxiliary brackets 76a and 76b are provided on the left and right sides of the case-front bracket 75. Thus, although indirectly, the battery case 7 supported by the cab cross member 81 is supported at seven or more locations relative to the vehicle body frame including the pair of side frames 61a and 61b, via the case-side brackets 73, the case-rear bracket 74, the case-front bracket 75, and the auxiliary brackets 76.

As shown in FIG. 4, the cab cross member 81 is disposed below a rear end portion of a cab 1 and supports a floor portion (hereinafter referred to as "cab floor") 12 of the cab 1. The cab cross member 81 has a structure with sufficient strength to withstand the weight of the cab 1 and its occupants.

In a vertical cross section along the vehicle longitudinal direction DL, the cab cross member 81 has an overall upwardly open U-shaped or inverted-hat shape. A rear surface portion 811 of the cab cross member 81, which faces toward the battery case 7, specifically toward the front end surface of the battery case 7, is inclined upward toward the rear in the vehicle longitudinal direction DL. In other words, the cab cross member 81 is formed such that the rear surface portion 811 thereof inclines downward toward the front in the vehicle longitudinal direction DL.

The battery case 7, while being suspended between the pair of side frames 61a and 61b, is positioned downward in an offset manner from the rear surface portion 811 of the cab cross member 81. The battery case 7 and the cab cross member 81 partially overlap in the vehicle longitudinal direction DL. Specifically, the upper surface portion 72 of the battery case 7 overlaps the bottom surface portion 812 of the cab cross member 81 in the vehicle longitudinal direction DL.

Furthermore, the front portion of the battery case 7 extends forward from the rear frame portions 612a and 612b and projects above the connecting portions 613a and 613b, thereby being positioned above the drive unit 4. In this embodiment, the "front portion" of the battery case 7 refers to approximately the front half of the battery case 7 including the front end portion 71. The deck floor 21 of the cargo bed 2 is mounted above the battery case 7 so as to cover it.

Thus, in this embodiment, the battery case 7 is disposed directly below the deck floor 21, and the drive unit 4 is disposed below the battery case 7.

### (Description of Operation and Advantages)

The advantages obtained by the present embodiment will be described below.

First, the battery case 7 is suspended and supported between the pair of side frames 61a and 61b, and the drive unit 4 is arranged such that at least the electric motor 41 is positioned below the battery case 7.

This arrangement enables the battery case 7 to suppress or shield the transmission of noise generated by the drive unit 4, particularly by the electric motor 41, into the vehicle cabin, thereby reducing the noise perceived by the driver and passengers inside the cabin.

Second, the battery case 7 (specifically, the case body 701 in the present embodiment) employs a flat-shaped case that is elongated in the vehicle longitudinal direction DL and widened in the vehicle lateral direction DW with respect to the vertical direction DH.

As a result, noise generated by the electric motor 41 can be more effectively suppressed by the battery case 7, thereby improving the comfort and habitability within the vehicle cabin.

Third, the drive unit 4 is supported relative to the pair of side frames 61a and 61b via a plurality of brackets (the cross member 63, the front bracket 64, and the rear bracket 65) that are spaced apart from one another in the vehicle longitudinal direction DL. The battery case 7 is disposed between the floor under the driver's seat and the rear bracket 65.

This configuration allows the battery case 7 to be favorably positioned while suppressing interference with the support mechanism 6 of the drive unit 4, which includes the plurality of brackets 63, 64 and 65.

Fourth, the front end portion 71f of the battery case 7 is positioned forward of the electric motor 41 of the drive unit 4 (specifically, the front face portion of the electric motor 41), and the rear end portion 71r is positioned rearward of the reduction gear 43 of the drive unit 4 (specifically, the rear end portion of the reduction gear 43).

This allows the battery case 7 to cover the entire drive unit 4, including the electric motor 41 and the reduction gear 43, from above, thereby further suppressing the transmission of noise.

Fifth, the battery case 7 is suspended and supported by the rear frame portions 612a and 612b of the pair of side frames 61a and 61b. The battery case 7 is arranged in a state where the front portion thereof protrudes above the connecting portions 613a and 613b, which incline upward toward the rear (or downward toward the front), and is positioned above the drive unit 4.

This enables the battery case 7 to effectively block the transmission of noise generated by the drive unit 4, particularly by the electric motor 41, thereby reducing the noise perceived inside the cabin.

Sixth, in an electric vehicle V, such as an electric truck, in which a cab 1 is provided above the front frame portions 611a and 611b of the side frames 61a and 61b, and the deck floor 21 of the cargo bed 2 is supported by the rear frame portions 612a and 612b, the transmission of noise generated by the electric motor 41 into the cabin can be suppressed.

Seventh, the upper surface portion 72 of the battery case 7 is arranged adjacent to the deck floor 21 of the cargo bed 2 in the vertical direction DH.

This enables the battery case 7 and the drive unit 4 to be efficiently arranged below the deck floor 21, ensures a space below the drive unit 4, and secures a sufficient minimum ground clearance for the electric vehicle V.

In the above description, the electric vehicle V is exemplified as a small flatbed truck; however, the electric vehicle V is not limited to this configuration and may be implemented in other vehicle types. For example, a one-box design vehicle having no hood or only a very short hood and a box-shaped body structure (e.g., van or minivan) may also be employed.

When a one-box design vehicle is employed, front-row seats in a cabin and their floor portion (hereinafter referred to as "front floor") is disposed above the front frame portions 611a and 611b of the pair of side frames 61a and 61b, rear-row seats in the cabin and their floor portion (hereinafter referred to as "rear floor") is disposed above the rear frame portions 612a and 612b. The front floor is supported by the front frame portions 611a and 611b, and the rear floor is supported by the rear frame portions 612a and 612b.

Thus, in an electric vehicle V, such as an electric one-box vehicle, in which front-row seats of the passenger compartment are provided above the front frame portions 611a and 611b of the side frames 61a and 61b, and the floor of the rear-row seats (rear-row floor portion) is supported by the rear frame portions 612a and 612b, it becomes possible to suppress the transmission of noise generated by the electric motor 41 into the passenger compartment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

- V: electric vehicle
- 1: cab
- 2: cargo bed
- 21: deck floor
- 22, 23, 24: movable gate
- 31: front wheel
- 32: rear wheel
- 4: drive unit
- 41: electric motor
- 42: inverter
- 43: reduction gear
- 5: power transmission mechanism
- 51: power distribution device
- 52: rear-wheel drive shaft
- 53: rear differential gear
- 54: front-wheel drive shaft
- 55: front differential gear
- 6: support mechanism
- 61a: left side frame
- 61b: right side frame
- 611a, 611b: front frame portion
- 612a, 612b: rear frame portion
- 613a, 613b: connecting portion
- 62a, 62b: side bracket
- 63: cross member
- 64: front bracket
- 65: rear bracket
- 7: battery case
- 701: case body
- 702: support arm

## Claims

1. An electric vehicle (V) comprising:
a drive unit (4) serving as a driving power source for propelling the vehicle;
a vehicle body frame (F) including a pair of side frames (61a, 61b) extending in a vehicle longitudinal direction (DL) and spaced apart from each other in a vehicle lateral direction (DW); and
a battery case (7) configured to accommodate a battery, the battery case (7) being supported between the pair of side frames (61a, 61b) and disposed at a predetermined height position,
wherein the drive unit (4) includes an electric motor (41) configured to be driven by electric power stored in the battery, and
wherein at least the electric motor (41) of the drive unit (4) is disposed below the battery case (7).

2. The electric vehicle (V) according to claim 1,
wherein the battery case (7) is a flat case elongated in the vehicle longitudinal direction (DL) and wide in the vehicle lateral direction (DW) relative to a vertical direction (DH), and extends across an entire width between the pair of side frames (61a, 61b).

3. The electric vehicle (V) according to claim 1 or 2,
wherein the drive unit (4) is supported on the vehicle body frame (F) via a plurality of brackets including a first bracket (63, 64) and a second bracket (65) disposed rearward of the first bracket (63, 64) in the vehicle longitudinal direction (DL), and
wherein the battery case (7) is disposed, in the vehicle longitudinal direction (DL), between a floor (12) of a driver's seat and the second bracket (65).

4. The electric vehicle (V) according to any one of claims 1 to 3,
wherein the drive unit (4) further includes a reduction gear (43) disposed rearward of the electric motor (41) in the vehicle longitudinal direction (DL) and configured to output an output torque of the electric motor (41) with a predetermined gear ratio, and
wherein the battery case (7) has a front end portion (71f) positioned forward of the electric motor (41) in the vehicle longitudinal direction (DL) and a rear end portion (71r) positioned rearward of the reduction gear (43) in the vehicle longitudinal direction (DL).

5. The electric vehicle (V) according to any one of claims 1 to 4,
wherein the pair of side frames (61a, 61b) respectively include:
a front frame portion (611a, 611b) extending in the vehicle longitudinal direction (DL);
a rear frame portion (612a, 612b) extending in the vehicle longitudinal direction (DL) and positioned rearward of and above the front frame portion (611a, 611b); and
a connecting portion (613a, 613b) connecting the front frame portion (611a, 611b) and the rear frame portion (612a, 612b) and inclined upward toward the rear,
wherein the battery case (7) is supported by the rear frame portions (612a, 612b), and
wherein a front portion of the battery case (7) projects forward from the rear frame portions (612a, 612b) toward above the connecting portions (613a, 613b) and is disposed above the electric motor (41).

6. The electric vehicle (V) according to claim 5, further comprising:
a cab (1);
a cab back panel (11); and
a deck floor (21) forming a load-receiving surface of a cargo bed (2),
wherein the cab (1) is disposed above the front frame portions (611a, 611b),
wherein the rear frame portions (612a, 612b) support the deck floor (21), and
wherein a front end portion (71f) of the battery case (7) is disposed, in the vehicle longitudinal direction (DL), in proximity to the cab back panel (11).

7. The electric vehicle (V) according to claim 6,
wherein the battery case (7) having an upper surface portion (72) disposed adjacent to the deck floor (21) in the vertical direction (DH).

8. The electric vehicle (V) according to claim 5, further comprising:
a front-row seat in a passenger compartment disposed above the front frame portions (611a, 611b), and
a rear-row seat in the passenger compartment of which floor is supported by the rear frame portions (612a, 612b) .
